# EUROPEAN PATENT SPECIFICATION

(11) **EP 3 694 812 B1**
(45) Date of publication and mention of the grant of the patent: **26.04.2023**
(21) Application number: 18808481.8
(22) Date of filing: 23.10.2018
(51) Int. Cl.: C02F 3/30

(54) **A METHOD FOR ENRICHMENT OF ANAEROBIC AMMONIUM OXIDATION BACTERIA**
VERFAHREN ZUR ANREICHERUNG VON ANAEROBEN AMMONIUMOXIDATIONSBAKTERIEN
PROCÉDÉ D'ENRICHISSEMENT DE BACTÉRIES ANAÉROBIES D'OXYDATION D'AMMONIUM

(30) Priority: 23.10.2017 TR 201716297
(43) Date of publication of application: 19.08.2020
(73) Proprietor: Tubitak, 06100 Ankara (TR)
(72) Inventor: ERDEM, Ipek, 34750 Atasehir, Istambul (TR); ANDAK, Bayram, 34912 Istanbul (TR)
(86) International application number: PCT/IB2018/058240
(87) International publication number: WO 2019/082071

(56) References cited:
- CN-A- 1 834 231
- CN-A- 102 259 976
- CN-A- 103 159 325
- CN-A- 105 923 765
- CN-A- 107 236 682
- LORNA GUERRERO ET AL: "Influence of the type and source of inoculum on the start-up of anammox sequencing batch reactors (SBRs)", JOURNAL OF ENVIRONMENTAL SCIENCE AND HEALTH. PART A: TOXIC HAZARDOUS SUBSTANCES AND ENVIRONMENTAL ENGINEERING, vol. 48, no. 10, 24 August 2013 (2013-08-24), pages 1301-1310, XP055533612, US ISSN: 1093-4529, DOI: 10.1080/10934529.2013.777268

## Description

### Technical Field

The present invention relates to a method for rapidly enriching "Anaerobic Ammonium Oxidation" bacteria using activated sludge from wastewater treatment plants.

### Prior Art

Ammonium removal, which is one of the most important parameters to be eliminated in the treatment of domestic and industrial wastewater, is now widely carried out by nitrification / denitrification processes. In the 1990s, the "Anaerobic Ammonium Oxidation (ANAMMOX)" bacteria was discovered by the Dutch Delft University. Said bacterium is used for ammonium removal from domestic and industrial wastewater in developed countries, especially in Europe and America, and its use is spreading under different process names. The most important advantages of using said bacteria over the nitrification / denitrification processes can be listed as:
the reduction of energy use by almost 60%, elimination of the use of chemical as there is no need for the additional carbon source, low level waste sludge formation and the absence of CO₂ emission.

However, the main disadvantage of said "Anaerobic Ammonium Oxidation" bacteria is that their growth rates are very slow. Optimum conditions are necessary for the enrichment of such bacteria in terms of mixture. Even though various periods of time are mentioned in the state of the art, generally 200 to 300 days are required for this process.

There are no "Anaerobic Ammonium Oxidation" bacteria which can be proliferated as pure culture in the state of the art. For this reason, the enriched cultures taken from the other facilities, which have "Anaerobic Ammonium Oxidation" processes, are used as inoculum in the lab and/or pilot scale studies and in full scale plants. Activated sludge taken from conventional biological nitrogen removal plants can also be used as an inoculum. However, in this case the start-up phase can last for months or even years.

Activated sludge process is frequently used in the biological treatment of wastewater in the state of the art. This process, which is developed in 1914 by Ardern and Lockett in the UK, is called as activated sludge, due to the occurence of active mass production that can stabilize the waste aerobically. In the activated sludge processes, the wastewater coming from screening or primary settling tank is mixed with different amounts (20-100%) of the concentrated sludge coming from the secondary settling tank. This mixture is delivered to a aeration tank where the organisms and wastewater are aerated. By this process, the content is well mixed while the oxygen requirement of bacteria is met. Under these circumstances, while the organisms convert some of the organic matter to carbon dioxide, nitrogen gas and water to produce energy, the rest of the organic matter is used to produce new cells by using energy obtained in oxidation.

In a Chinese patent document, numbered CN203112585, rapid enrichment reaction equipment is mentioned for "Anaerobic Ammonium Oxidation" (ANAMMOX). In the invention disclosed in said document, the reactor is a continuous stirred tank reactor containing a peristaltic pump and an inlet tank. At the base of this reactor, there is a water influent and effluent line. In the invention, there is also a thermometer and the temperature of the reactor is kept at 35 ±1. °C.

In another Chinese patent document, numbered CN105923765, a rapid start method for an anaerobic ammonia oxidation reactor is disclosed. Subject matter of CN105923765 is the design of method for anaerobic ammonia oxidation reactor to speed up the nitrogen removal process. Basically this method comprises the steps of reactor design, sludge seeding, parameter control and the control of operation flow. The process includes the bacterial enrichment process, however the way used for enrichment is different. Furthermore this document discloses the use of nutrient solution having NH₄-N and NO₂-N concentration within ranges of 50-60mg/L and 50-70mg/L respectively

In an article, titled "Influence of the type and source of inoculum the start-up of anammox sequencing batch reactors (SBRs)" by Lorna GUERRERO et al., the aim of the work is to study the influence of different inoculum types taken from different reactor configurations (aerobic and anaerobic) on the start-up and enrichment of Anammox biomass in SBRs under different operational conditions, and additionally to elucidate whether the use of zeolite as biomass carrier improves the start-up of the SBRs or not. In this document the NH₄-N and NO₂-N concentrations were both given as 12.25-80 mg/L and their molar ratio was kept at a value of 1. This range is so wide. In the present invention the optimum nutrient concentration values experimentally determined and the ratio between these substances is different from 1.

In yet another Chinese patent document, numbered CN107236682, an enrichment culture method for an anaerobic ammonia oxidation sludge strain is disclosed. Said enrichment culture method comprises the step of inoculating a sludge mixture into industrial wastewater so as to efficiently enrich an anaerobic ammonium oxidation bacteria flora. The disclosed method explains the mass ratio of aerobic digested sludge to anaerobic digested sludge which is used for efficient anammox enrichment. Given values for NH₄Cl and NaNO₂ are 50-170 mg/L and 65-221 mg/L respectively. In the document it is explained that these ingredients were added in the form of different stages in the operation of the reactor. It is explainded that their levels are not constant in a fixed time but gradually increasing. These are not the nutrient but the reactor concentrations where the nitrification process takes place.

In yet another Chinese patent document, numbered CN1834231, a method and device for culturing anaerobic ammonia oxidizing bacteria is disclosed. In particular a method for removing nitrogen in nitrogen-containing liquids such as waste water, and using ammonia and nitrous acid as the nitrogen components in the nitrogen-containing liquid as a substrate is disclosed. In this document substrate concentrations for ammonia and nitrite sources were given as 50-210 mg/L and 50-250 mg/L respectively in wastewater. Defined concentration ranges are large and any ratio between these two substances is not given. In addition, there is no further explanation about the nutrient solution in defined system.

In yet another Chinese patent document, numbered CN102259976, the disclosed invention relates to a quick start method of an anaerobic ammonia oxidation reactor. In this document, initial ammonia and nitrite concentrations were given as 70mg/L in wastewater inlet and their ratio was kept as 1:1. Also these concentrations are not nutrient solution concentrations unlike our invention.

The method disclosed in yet another Chinese patent document, numbered CN103159325 relates to the field of water treatment, and particularly relates to a method for enriching anaerobic ammonium oxidation bacteria by performing nitration treatment on common activated sludge. In this method ammonia and nitrite, with the NO₂:NH₄ molar ratio of 1 ± 0.2, are added to the reactor. Their concentrations in the reactor are initially begin from 20mg / L and gradually increase to 100mg / L. This method is totally different from the present invention. In the present invention, the ammonia and nitrite concentrations were kept constant throughout the enrichment process. When the ammonia and nitrite concentrations are increased gradually, the NO₂-N accumulates in the media making it toxic rather than nourishing.

### Brief Description of Invention

The aim of the present invention is to carry out a method for enriching the "Anaerobic Ammonium Oxidation" bacteria using activated sludge taken from wastewater treatment plants.

Another aim of the present invention is to carry out a method that enables "Anaerobic Ammonium Oxidation" bacteria to proliferate in a short period of time such as 60 days.

### Detailed Description of the Invention

The method for the enrichment of the anaerobic ammonium oxidation bacteria to achieve the purpose of the invention; comprises the following steps:
- feeding of the reactor where an enrichment process will take place, with active sludge comprising at least heterotrophic carbon-removing bacteria that make carbon removal, autotrophic aerobic ammonium oxidation bacteria that remove ammonia in an aerobic environment, autotrophic nitrite oxidation bacteria that remove nitrite in an aerobic environment, heterotrophic denitrifying bacteria that convert nitrate to nitrogen gas (N₂ (g)) in an anoxic environment, anaerobic ammonium oxidation bacteria that remove ammonium in an anaerobic environment and phosphate accumulation bacteria that perform phosphorus removal,
- feeding of the reactor with nutrient solution having pH value between 7 to 7.3 and 0.01 - 0.09 mg/L dissolved oxygen characterized in that the nutrient solutions contains 40 mg/L NH₄-N and 50 mg/L NO₂-N and trace elements in predetermined concentrations.

A preferred application of the invention, the content of nutrient solution is shown in Table 1 below:

**Table 1. The nutrient solution content in the exemplary application of the invention**

| **Solution type** | **Chemical substance** | **Amount** |
|---|---|---|
| | (NH₄)₂SO₄ | 40 mg/L (NH₄⁺-N) |
| **Nutrient solution** | NaNO₂ | 50 mg/L (NO₂⁻-N) |
| | KHCO₃ | 0.1250 g/L |
| | KH₂PO₄ | 0.0540 g/L |

| | | |
|---|---|---|
| **Trace element solution I** | KCl | 0.0014 g/L |
| | CaCl₂ | 0.0014 g/L |
| | NaCl | 0.0010 g/L |
| | MgSO₄·7H₂O | 0.0010 g/L |
| | EDTA (C₁₀H₁₄N₂Na₂O₈·2H₂O) | 0.0050 g/L |
| | Trace element solution I | 1.25 ml/L |
| | Trace element solution II | 1.25 ml/L |
| | EDTA (C₁₀H₁₄N₂Na₂O₈·2H₂O) | 5 g/L |
| | FeSO₄ | 5 g/L |
| **Trace element solution II** | EDTA | 15 g/L |
| | ZnSO₄·7H₂O | 0.430 g/L |
| | CoCl₂·6H₂O | 0.240 g/L |
| | MnCl₂·4H₂O | 0.990 g/L |
| | CuSO₄·5H₂O | 0.250 g/L |
| | Na₂MoO₄·2H₂O | 0.220 g/L |
| | NiCl₂·6H₂O | 0.190 g/L |
| | Na₂SeO₄·10H₂O | 0.210 g/L |
| | H₃BO₄ | 0.014 g/L |
| | Na₂WO₄·2H₂O | 0.050 g/L |

According to the invention, the nutrient solution is adjusted so as to contain concentration of 40 mg/L NH₄-N and 50 mg/L NO₂-N. Concentrations of NO₂-N over 50 mg/L, slow down the anaerobic ammonium oxidation bacteria and stop the activity of these bacteria.

According to the invention, the concentration of dissolved oxygen in the tap water is brought into between 0.01 and 0.09 mg / L values while preparing the nutrient solutior Thus, it is ensured that the anaerobic ammonium oxidation bacteria, whose activities are slowing down or stopped, do not enter the internal respiratory phase.

According to a preferred embodiment of the invention, while preparing the nutrient solution, the pH value of the solution is maintained between 7 and 7.3 via nitrogen (N₂) and / or carbon dioxide (CO₂). Thus, the negative effect of pH 8 or higher values on anaerobic ammonium oxidation bacteria is prevented. In the preferred embodiment according to the invention, while preparing the nutrient solution, a CO₂:N₂ gas mixture is constantly supplied to the solution at the rate of 10:90 to keep the dissolved oxygen concentration constant and to keep the pH value at a value between 7 and 7.3. In an alternative embodiment according to the invention, pure N₂ gas to maintain the oxygen concentration within a range of 0.01 - 0.09 mg/L and pure CO₂ gas to maintain the pH between 7 and 7.3, is manually supplied to the solution, while preparing the nutrient solution.

In accordance with the method described above; experimental results related with the feeding of the nutrient solution with a dissolved oxygen concentration between 0.01 and 0.09 mg / L and a pH value between 7 and 7.3, having a concentration of 40 mg / L of NH₄-N and 50 mg / L of NOz-N, and nutrient and trace elements with predetermined concentrations, to the activated sludge taken from the recycle line of a biological wastewater treatment plant previously into an upflow fixed bed reactor is shown in Graph 1 below. Accordingly, anaerobic ammonium oxidation bacteria are beginning to gain activity on the 60^{th} day. At the end of the 110^{th} day, depending on the PCR analysis results, it was observed that 10.48% of the sludge by weight was composed of anerobic ammonium oxidation bacteria, in addition to these, the amount of nitrogen removal reaches 1,48 kg/m³.day at the end of the 150^{th} day.

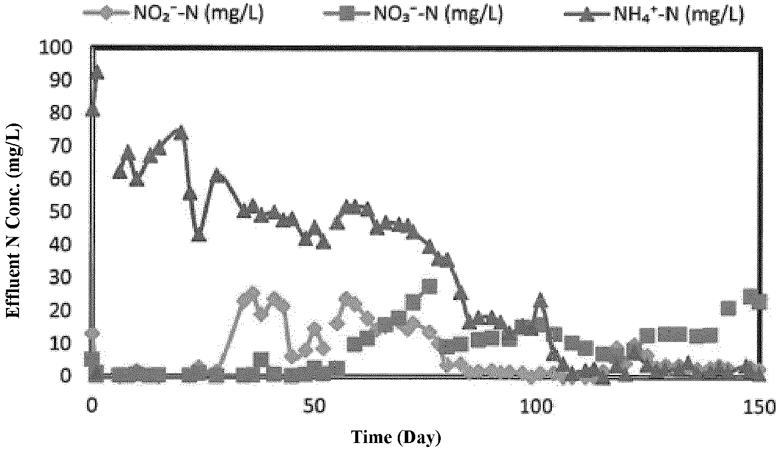

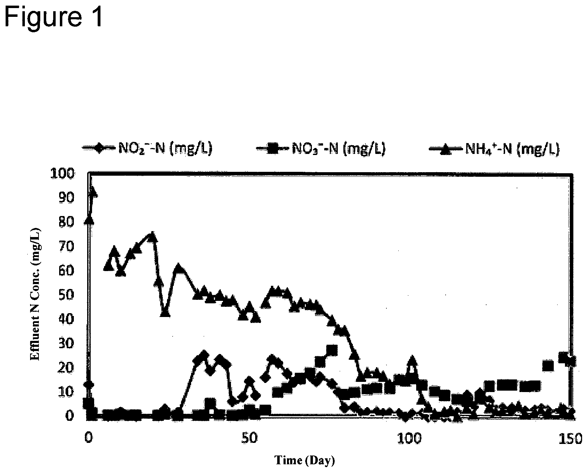

### Figure 1. Graphic that shows analysis result of NH₄-N, NO₂-N and NO₃-N in an experiment made according to the method subject of the invention

Around these basic concepts, it is possible to develop a wide variety of applications related to the topic of invention "A Method for Enrichment of Anaerobic Ammonium Oxidation Bacteria" and the invention can not be limited to the examples described herein, it is essentially as specified in claims.

## Claims

1. A method for enrichment of anaerobic ammonium oxidation bacteria, comprising the following steps:
- feeding of the reactor where an enrichment process will take place, with active sludge comprising at least heterotrophic carbon-removing bacteria that make carbon removal, autotrophic aerobic ammonium oxidation bacteria that remove ammonia in an aerobic environment, autotrophic nitrite oxidation bacteria that remove nitrite in an aerobic environment, heterotrophic denitrifying bacteria that convert nitrate to nitrogen gas (N₂ (g)) in an anoxic environment, anaerobic ammonium oxidation bacteria that remove ammonium in an anaerobic environment, and phosphate accumulation bacteria that perform phosphorus removal,
- feeding of the reactor with nutrient solution having pH value between 7 and 7.3 and 0.01 - 0.09 mg/L dissolved oxygen **characterized in that** the nutrient solution contains 40 mg/L NH₄-N and 50 mg/L NO₂-N and trace elements in predetermined concentrations.

2. The method according to Claim 1 wherein a 10:90 CO₂:N₂ gas mixture is continuously supplied to the solution used in the step of feeding the nutrient solution to the reactor so that the dissolved oxygen level of the solution does not rise and the pH value remains between 7 and 7.3 while preparing the nutrient solution.

## Patentansprüche

1. Verfahren zur Anreicherung von anaeroben Ammoniumoxidationsbakterien, umfassend die folgenden Schritte:
- Zuführung des Reaktors, in dem ein Anreicherungsprozess stattfindet, mit dem aktiven Schlamm, der zumindest die heterotrophen kohlenstoffentfernenden Bakterien, die den Kohlenstoffentzug vornehmen, autotrophe aerobe Ammoniumoxidationsbakterien, die Ammoniak in einer aeroben Umgebung entfernen; autotrophe Nitritoxidationsbakterien, die Nitrit in einer aeroben Umgebung entfernen; heterotrophe denitrifizierende Bakterien, die in einer anoxischen Umgebung Nitrat in Stickstoffgas (N₂ (g)) umwandeln, anaerobe Ammoniumoxidationsbakterien, die Ammonium in einer anaeroben Umgebung entfernen, und Phosphatakkumulationsbakterien, die die Phosphorentfernung durchführen, umfasst,
- Zuführung des Reaktors mit einer Nährlösung mit einem pH-Wert zwischen 7 und 7,3 und 0,01 - 0,09 mg/L gelöstem Sauerstoff, **dadurch gekennzeichnet, dass**
die Nährlösung 40 mg/L NH₄-N und 50 mg/L NO₂-N sowie Spurenelemente in vorgegebenen Konzentrationen enthält.

2. Verfahren nach Anspruch 1, wobei ein 10:90 CO₂:N₂-Gasgemisch kontinuierlich der Lösung zugeführt wird, die in dem Schritt der Zuführung der Nährlösung zum Reaktor verwendet wird, so dass der Gehalt an gelöstem Sauerstoff in der Lösung nicht ansteigt und der pH-Wert bei der Herstellung der Nährlösung zwischen 7 und 7,3 bleibt.

## Revendications

1. Méthode d'enrichissement des bactéries anaérobies d'oxydation de l'ammonium, comprenant les étapes suivantes:
- alimentation du réacteur, où se déroulera un processus d'enrichissement, avec la boue active comprenant au moins le carbone hétérotrophe, - élimination des bactéries qui rendent l'élimination du carbone, des bactéries aérobies autotrophes d'oxydation de l'ammonium qui éliminent l'ammoniac dans un environnement aérobie; des bactéries autotrophes d'oxydation des nitrites qui éliminent les nitrites dans un environnement aérobie; des bactéries dénitrifiantes hétérotrophes qui convertissent le nitrate en azote gazeux (N₂ (g)) dans un environnement anoxique, des bactéries anaérobies d'oxydation de l'ammonium qui éliminent l'ammonium en milieu anaérobie, et des bactéries d'accumulation de phosphate qui réalisent l'élimination du phosphore,
- alimentation du réacteur avec une solution nutritive ayant un pH compris entre 7 et 7.3 et 0.01 - 0.09 mg/L d'oxygène dissous, **caractérisée en ce que**; la solution nutritive contient 40 mg/L de NH₄-N et 50 mg/L de NO₂-N et des oligo-éléments à des concentrations prédéterminées.

2. Méthode selon la revendication 1, dans laquelle un mélange gazeux CO₂:N₂ de 10:90 est fourni en continu à la solution utilisée lors de l'étape d'alimentation de la solution nutritive dans le réacteur, de sorte que le niveau d'oxygène dissous de la solution n'augmente pas et que la valeur du pH reste comprise entre 7 et 7.3 lors de la préparation de la solution nutritive.
